# EUROPEAN PATENT SPECIFICATION

(11) **EP 4 379 502 B1**
(45) Date of publication and mention of the grant of the patent: **13.08.2025**
(21) Application number: 22210420.0
(22) Date of filing: 30.11.2022
(51) Int. Cl.: G06F 1/18

(54) **HYGIENIC SUPPORT STRUCTURE, COMPUTER DEVICE SYSTEM AND METHOD FOR MOUNTING THE HYGIENIC SUPPORT STRUCTURE**
HYGIENISCHE TRÄGERSTRUKTUR, COMPUTERVORRICHTUNGSSYSTEM UND VERFAHREN ZUR MONTAGE DER HYGIENISCHEN TRÄGERSTRUKTUR
STRUCTURE DE SUPPORT HYGIÉNIQUE, SYSTÈME DE DISPOSITIF INFORMATIQUE ET PROCÉDÉ DE MONTAGE DE LA STRUCTURE DE SUPPORT HYGIÉNIQUE

(43) Date of publication of application: 05.06.2024
(73) Proprietor: Omron Europe B.V., 2132 JD Hoofddorp (NL)
(72) Inventor: Dingemanse, Rudolf, 5234 GM 's-Hertogenbosch (NL)
(74) Representative: HKW Intellectual Property PartG mbB

(56) References cited:
- EP-A1- 2 779 599
- EP-A1- 3 722 926
- US-A1- 2018 124 939
- US-A1- 2018 335 805

## Description

The present invention relates to a hygienic support structure for a computer device comprising a monitor. The present invention further relates to a computer device system and to a method for mounting the hygienic support structure. Computer devices and in particular industrial computer devices can be used in an industrial context. In such an industrial context, the cleanliness of the entire environment can be extremely important to avoid contamination, dust or the like. In this view, it is desirable to facilitate the cleaning of computer devices used in the industrial context. This is for example achieved through a hygiene-compliant display as shown in JP H 11 330730 A and EP 3 722 926 A1. Waterproof casings for portable electronic devices comprising a display are known as well from US 2018/335805 A1, US 2018/124939 A1 and EP 2 779 599 A1.

It is one object of the present invention to provide an improved hygienic support structure for a computer device.

According to a first aspect, a hygienic support structure for a computer device comprising a monitor is provided. The hygienic support structure includes:
a front plate;
an adjustment plate configured to be connected to the computer device; and
a screwing mechanism; wherein
in a mounted state, the front plate and the adjustment plate are connected to one another using the screwing mechanism such as to face one another,
the screwing mechanism is configured for pushing the front plate and the adjustment plate together in the mounted state; and
the adjustment plate includes a spring portion facing the front plate in the mounted state, the spring portion being for pushing the adjustment plate away from the front plate in the mounted state.

By providing a spring portion and a screwing mechanism acting in different force directions, the distance between the adjustment plate and the front plate can be adjusted in a precise manner. Accordingly, the front plate can be aligned with the monitor, in particular such as to form a flush surface with the monitor. The precise positioning of the front plate allows to compensate for tolerances in the dimensions of the front plate, adjustment plate and/or computer device. By providing the front plate in the desired position, in particular flush with the monitor, it can be ensured that no gap is formed between the hygienic support structure and the computer device, thereby improving the cleanliness of the computer device.

The computer device may be an industrial computer (IC) Such an IC may be used to perform tasks in an industrial environment, for example for controlling a production system. The computer device includes at least a monitor, also designated as a screen or a display, preferably a touch screen or display. The computer device may further include a processor unit, a storage unit or other standard components of a computer device. These components may all be provided within one housing and/or all be arranged within the hygienic support structure.

The hygienic support structure can be used to protect the computer device from being affected from external factors, such as dust, electromagnetic interference and/or moisture. The hygienic support structure can form a barrier between the computer device and its surroundings. The hygienic support structure can be at least partly made of plastic, preferably of transparent or translucent plastic. The hygienic support structure may be attached to the computer device for protection thereof.

The hygienic support structure can be provided in two states, namely the mounted state and the unmounted state. In the mounted state, the different parts of the hygienic support structure are mounted (attached) to one another and the hygienic support structure is attached to the computer device. In other words, in the mounted state, the hygienic support structure protects the computer device. In the unmounted state, the different parts of the hygienic support structure are at least partly loose from one another and the computer device is not protected by the hygienic support structure.

The hygienic support structure can comprise multiple parts which are attachable to one another and/or to the computer device. The front plate can be formed of a thin layer of plastic or metal material (for example from sheet metal). The front plate may have a rectangular or substantially rectangular outer shape. The front plate preferably has corners and/or edges having a rounded shape. Such rounded shapes render the front plate smoother, which enables easier cleaning and detergent access.

The front plate can be made in a casting process, in a molding process, as a 3D printed element or using a different manufacturing technique. To achieve easy cleanliness, the front plate can be made of a single piece. Providing the front plate as a single piece is advantageous as compared to having separate pieces because separate pieces imply gaps and slits therebetween, in which contamination can accumulate and which are overall more difficult to clean.

In the mounted state, the front plate can be flush with the monitor. The front plate being flush with the monitor may mean that when looking onto the monitor, the monitor and the front plate form a smooth (flush) surface. The front plate can extend in parallel to the monitor in the mounted state. The monitor and the front plate being flush in particular means that a frontmost side of the monitor is flush with a frontmost side of the front plate. When looking onto the monitor, the front plate may form a frame around the monitor.

The front plate may be a loose element. Alternatively, it can be part of a furniture, a building, a machine cladding, a device housing or the like. This allows the computer device to be directly built into a furniture, a building, a machine cladding, a device housing or the like of the industrial environment.

A side of the computer device comprising the monitor may be designated as the front side of the computer device. The front plate can be flush with the front side. A side of the computer device that is opposite to the front side is designated as the back side. The adjustment plate can be attached to the back side of the computer device.

The adjustment plate can be formed of a thin layer of plastic or metal material. The front plate may have a rectangular or substantially rectangular outer shape. In particular, the adjustment plate has connector elements for attaching (connecting) it to the computer device. The connector elements connecting the adjustment plate to the computer device can be implemented as the fixing elements described in US 2017/0255237 A1. Alternatively or additionally, the adjustment plate can be connected to the computer device using screws, glue, pins or the like. The adjustment plate can extend in parallel to the monitor in the mounted state. The adjustment plate may be connected to the computer device in the mounted state.

The screwing mechanism includes at least one screw. The screwing mechanism is provided such as to push the front plate and the adjustment plate together in the mounted state, thereby attaching the front plate and the adjustment plate. The screwing mechanism may allow maintaining the front plate and the adjustment plate in a predetermined position with respect to one another. The screwing mechanism may allow modifying a distance between the adjustment plate and the front plate, in particular by tightening or loosening the screwing mechanism. The adjustment plate and the front plate facing each other in the mounted state in particular means that the adjustment plate and the front plate are arranged in parallel or substantially in parallel to one another.

The spring portion can be attached to the adjustment plate and/or formed as an integral part thereof. The spring portion pushes the adjustment plate away from the front plate. In other words, the force of the spring portion may act into a direction opposite to that of the screwing mechanism. The spring portion facing the front plate in the mounted state in particular means that the spring portion is arranged between the front plate and the adjustment plate. The spring portion may force the adjustment plate to remain at a predetermined distance from the front plate. The spring portion can be an elastic element.

According to an embodiment, the spring portion is a leaf spring. The leaf spring is in particular formed by a metallic sheet having an arc-shape.

For example, the leaf spring is a single leaf spring, i.e. a leaf spring made of a single sheet. The leaf spring can be attached on one end thereof to the adjustment plate, for example through a screw or a rivet. Using a leaf spring as the spring portion is advantageous because leaf springs are readily available.

According to a further embodiment, a distance of the front plate relative to the adjustment plate is adjustable using the screwing mechanism.

Thereby, the screwing mechanism allows a convenient positioning of the front plate with respect to the adjustment plate. In particular, the distance of the front plate relative to the adjustment plate is adjustable using only the screwing mechanism. The distance of the front plate relative to the adjustment plate can correspond to a distance between the front plate and the adjustment plate along a line that is perpendicular to the front plate and the adjustment plate.

According to a further embodiment, the adjustment plate and/or the front plate has a cutout, in particular a rectangular cutout, therein for accommodating the computer device.

The cutout can be an opening in the adjustment plate and/or the front plate. The adjustment plate and/or the front plate can be a substantially rectangular plate having a frame shape around the cutout. The cutout in the front plate may have dimensions identical or nearly identical with the dimensions of the monitor such that the monitor can be inserted into the cutout with little to no gap between the monitor and the front plate. This prevents dust accumulations between the front plate and the monitor.

According to a further embodiment, the dimensions of the cutout of the adjustment plate are identical with the dimensions of the cutout of the front plate, wherein in the mounted state, the cutout of the adjustment plate and the cutout of the front plate are aligned with one another.

Alternatively, the dimensions of the cutout of the adjustment plate can be smaller than the dimensions of the cutout of the front plate.

According to a further embodiment, the adjustment plate includes at least two, preferably at least four, spring portions.

By means of multiple spring portions, a homogeneous distance between the adjustment plate and the front plate can be kept all around the perimeter of the adjustment plate. This allows positioning the front plate in a more accurate manner. Preferably, the spring portions are evenly distributed around the adjustment plate.

According to a further embodiment, the spring portions are arranged on at least two different sides of the cutout in the adjustment plate.

In particular, the spring portions are arranged in a symmetrical manner around the adjustment plate.

According to a further embodiment, the spring portion is screwed onto the adjustment plate or attached thereto using a rivet.

This allows convenient and easy fixing of the spring portion onto the adjustment plate. Alternatively, the spring portion can be glued onto the adjustment plate.

According to a further embodiment, the screwing mechanism is formed by N screws and N nuts, wherein
N is larger or equal to two, preferably larger or equal to four;
the N screws are fixedly attached to the front plate and protruding towards the adjustment plate in the mounted state;
the adjustment plate includes at least N openings, the openings being arranged such as to accommodate the screws in the mounted state; and
in the mounted state, the N nuts are fixed onto the screws such as to maintain the adjustment plate in place with respect to the front plate.

N can be a natural number larger or equal to two. The openings in the adjustment plates can be through holes. In the mounted state, the N screws can protrude through the N corresponding openings. The N nuts can be screwed onto the N screws to maintain the position of the adjustment plate with respect to the front plate, in particular to push the adjustment plate towards the front plate. The N openings can correspond to the N screws and be arranged in a same pattern as the N screws.

According to a further embodiment, the adjustment plate includes at least N+1 openings, wherein at least one opening is configured to receive a locking screw for fixedly maintaining a distance between the adjustment plate and the front plate.

In particular, the front plate may include an opening aligned with the N+1-th opening of the adjustment plate. The locking screw can be placed through the N+1-th opening of the adjustment plate into the opening in the front plate to maintain the position of the front plate respective to the adjustment plate.

According to a second aspect, a computer device system is provided. The computer device system comprises:
a computer device comprising a monitor; and
the hygienic support structure according to the first aspect or according to an embodiment thereof; wherein:
   the computer device is connected to the adjustment plate; and
   a distance between the adjustment plate and the front plate is set using the screwing mechanism such that the monitor and the front plate are flush.

The computer device system can correspond to the hygienic support structure according to the first aspect or according to an embodiment thereof, which is mounted to the computer device.

The embodiments and features described with reference to the hygienic support structure according to the first aspect or an embodiment thereof apply mutatis mutandis to the computer device system according to the second aspect.

According to an embodiment, the computer device is an industrial computer (IC).

According to a further embodiment, the computer device includes a processor and a storage unit.

In particular, the computer device is an all-in-one monitor, in which all elements of the computer device are included in the monitor. For example, the computer device, in particular the all-in-one monitor includes a processor, display, storage unit, main board, motherboard, CPU, disk drive, hard disk, power supply, cooling system or the like.

According to a further embodiment, the computer device system further comprises a protective sheet which has dimensions larger than the cutout of the front plate, wherein in the mounted state, the protective sheet is configured to be attached to another side of the front plate than the side to which the adjustment plate is attached.

The protective sheet can be a thin plastic layer. The protective sheet can be made of a transparent or translucent material. The protective sheet can be made of an adhesive material. The protective sheet can be a touch-sensitive sheet allowing a user to perform an input on a touch screen of the monitor through the protective sheet.

The protective sheet can be placed onto a front side of the monitor. Since its dimensions are larger than the cutout of the front plate, the protective sheet placed on the front side covers not only the entire monitor, but also at least parts of the front plate, preferably the entire front plate. The protective sheet in particular covers up a gap between the front plate and the monitor, thereby reducing dust accumulating therein. The computer device system is thereby rendered more hygienic. The protective sheet can be part of the hygienic support structure.

According to a third aspect, a method for mounting the hygienic support structure according to the first aspect or according to an embodiment thereof on a computer device comprising a monitor is provided. The method comprises:
connecting the adjustment plate to the computer device;
placing the front plate such that it faces the adjustment plate; and
fastening the screwing mechanism such as to connect the front plate and the adjustment plate in a position in which the front plate is flush with the monitor.

The method steps can be performed by a user and/or by a robot.

The embodiments and features described with reference to the hygienic support structure according to the first aspect or an embodiment thereof or with reference to the computer device system according to the second aspect or an embodiment thereof apply mutatis mutandis to the method according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a hygienic support structure according to a first embodiment;
Fig. 2 shows an exploded view of the hygienic support structure according to Fig. 1;
Fig. 3 shows a computer device system according to a first embodiment;
Fig. 4 shows an exploded view of the computer device system of Fig. 3;
Fig. 5 shows a sectional view of the computer device system of Fig. 3;
Fig. 6 shows a side view of the computer device system of Fig. 3;
Fig. 7 shows a detailed section of the computer device system of Fig. 3;
Fig. 8 shows an example for a section of an adjustment plate;
Fig. 9 shows a detailed section of the computer device system of Fig. 3;
Fig. 10 shows a connection between the hygienic support structure and the computer device in the computer device system of Fig. 3;
Fig. 11 shows a hygienic support structure according to a second embodiment; and
Fig. 12 shows a method for mounting the hygienic support structure on a computer device.

In the Figures, like reference numerals designate like or functionally equivalent elements, unless otherwise indicated.

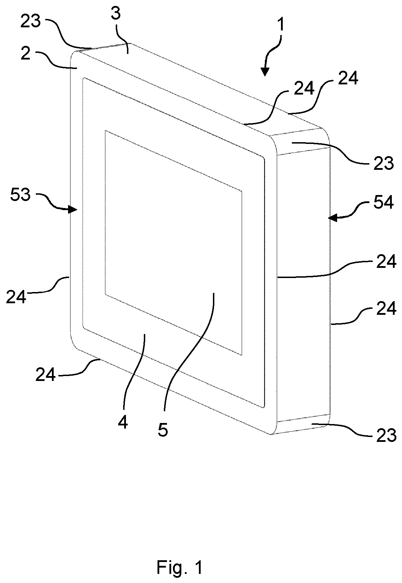

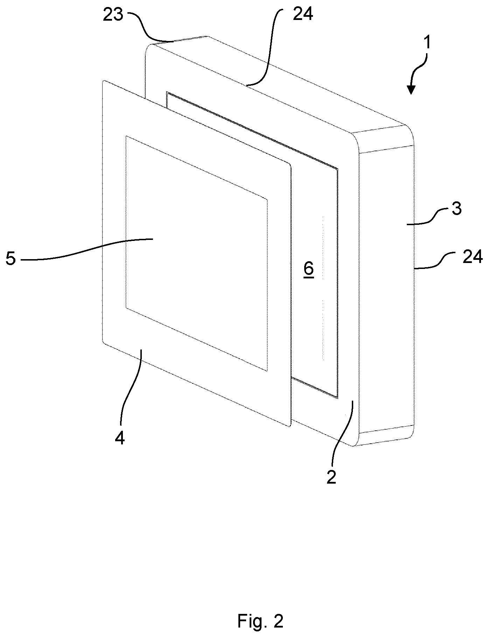

Fig. 1 shows a hygienic support structure 1 in a mounted state but which is not connected to a computer device. Fig. 2 shows the hygienic support structure 1 in a partially mounted state, in which a protective sheet 4 is removed from the hygienic support structure 1.

In detail, the hygienic support structure 1 has a rectangular box shape. The hygienic support structure 1 has corners 23 and edges 24 which have a rounded shape. Such rounded shapes render the hygienic support structure 1 smoother, which enables easier cleaning and detergent access.

The hygienic support structure 1 comprises a front plate 2 on a front side 53 of the hygienic support structure 1. A side of the hygienic support structure 1 that is opposite to the front side 53 is designated as the back side 54.

The hygienic support structure 1 further comprises a housing 3 and the protective sheet 4. The front plate 2 can be part of the housing 3, which can itself be part of a machine in an industrial environment or the like. The front plate 2 and the housing 3 are made of stainless steel in the present example.

The elements of the hygienic support structure 1, in particular the front plate 2 and the housing 3 can be made in a casting and/or in a molding process. To achieve easy cleanliness, the front plate 2 and/or the housing 3 are preferably made of a single piece. Providing the front plate 2 and/or the housing 3 as a single piece is advantageous as compared to having separate pieces as separate pieces imply gaps and slits therebetween, in which contamination can accumulate and which are overall more difficult to clean.

As shown in Fig. 2, the front plate 2 has a front plate cutout 6 (or simply "cutout 6") which corresponds to an opening in which a computer device can be placed such that a monitor of the computer device shows through the cutout 6.

The protective sheet 4 is made of plastic. The protective sheet 4 is adhesive and placed on a frontmost side of the hygienic support structure 1 such as to cover up the cutout 6. The protective sheet 4 has a transparent window 5 for showing the monitor therethrough when viewed from the front side 53.

The hygienic support structure 1 of Fig. 1 and 2 further includes an adjustment plate 7 which is located within the housing 3 and not visible in the representations of Fig. 1 and 2.

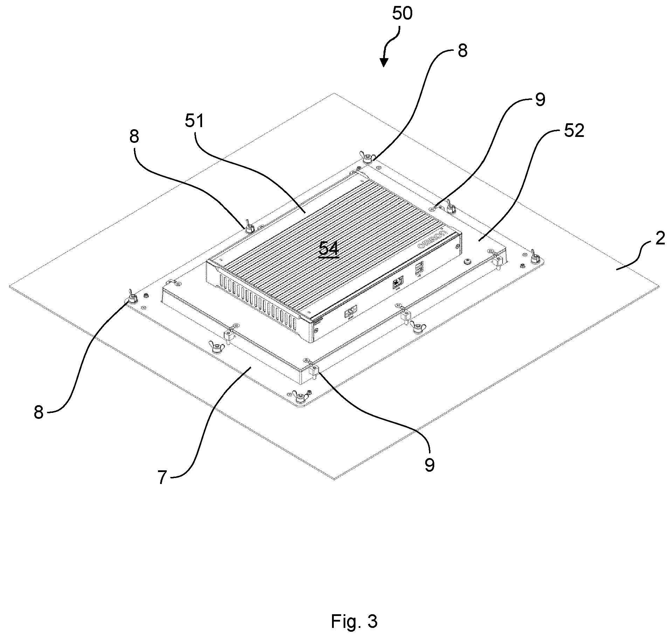

The hygienic support structure 1 of Fig. 1 or 2 is made for being mounted to a computer device in order to protect it from dust, chemicals and the like. The hygienic support structure 1 of Fig. 1 and 2 being mounted to a computer device 51 is shown in Fig. 3 to 10, which will be described in the following.

Fig. 3 shows a computer device system 50 including the hygienic support structure 1 of Fig. 1 and 2 as well as a computer device 51 connected thereto. The computer device 51 is an all-in-one IPC. In the representation of Fig. 3, a back side of the IPC 51 and of the hygienic support structure 1 is showing upwards. A display 52 (screen or monitor) of the IPC 51 is showing downwards in the representation of Fig. 3.

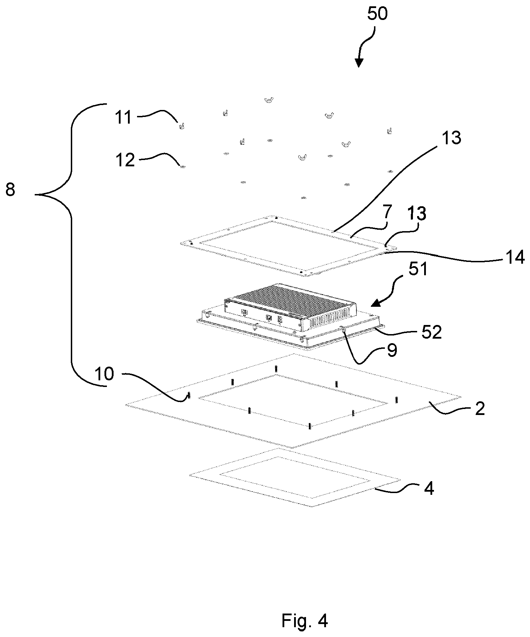

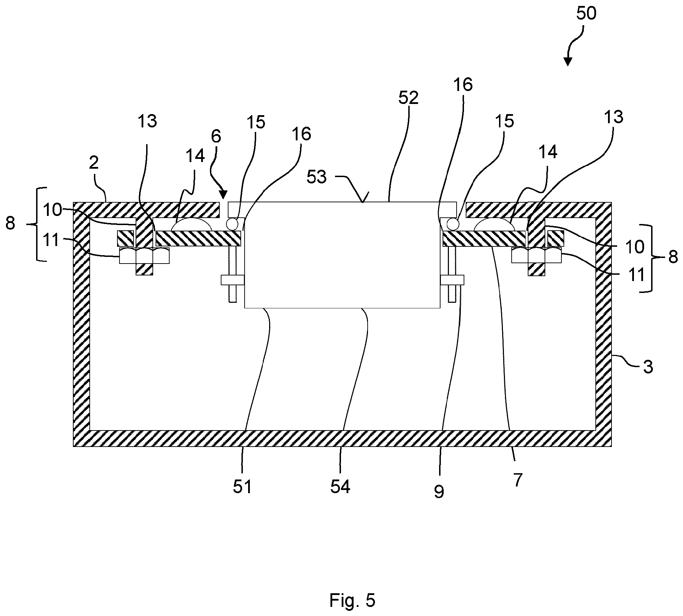

Fig. 3 to 5 show the structure of the hygienic support structure 1 in more detail. Namely, besides the front plate 2, the hygienic support structure 1 further includes the adjustment plate 7 and a screwing mechanism 8. The different elements forming the hygienic support structure 1 are well shown in Fig. 4, which shows an exploded view of the computer device system 50. In Fig. 4, the hygienic support structure 1 is in an unmounted state, while it is in a mounted state in Fig. 3 and 5.

The front plate 2 is a rectangular thin layer of stainless steel with the cutout 6 having a rectangular shape. The dimensions of the cutout 6 are such that the cutout 6 can just accommodate the monitor 52 of the IPC 51.

The adjustment plate 7 is a thin layer of stainless steel with an adjustment plate cutout 16 ("cutout 16") having a rectangular shape. The cutout 16 has dimensions slightly smaller than the cutout 6.

The screwing mechanism 8 includes screws 10 which are integrally formed with the front plate 2. When the hygienic support structure 1 is assembled, the screws 10 protrude through corresponding openings 13 formed in the adjustment plate 7.

The front plate 2 and the adjustment plate 7 are fixed to one another using nuts 11, which are screwed onto the screws 10. The screws 10, the nuts 11 and washers 12 form the screwing mechanism 8.

In the examples of Fig. 3 and 4, the screwing mechanism 8 includes N=8 screws 10, nuts 11, and washers 12 evenly spread out around the adjustment plate 7. The screwing mechanism 8 pushes the front plate 2 and the adjustment plate 7 together.

The adjustment plate 7 includes four spring portions 14 formed as a single leaf spring. The spring portions 14 are small metal portions, which are bent in a U-shape. In the mounted state, the spring portions 14 are arranged between the adjustment plate 7 and the front plate 2 such as to push the front plate 2 and the adjustment plate 7 away from one another.

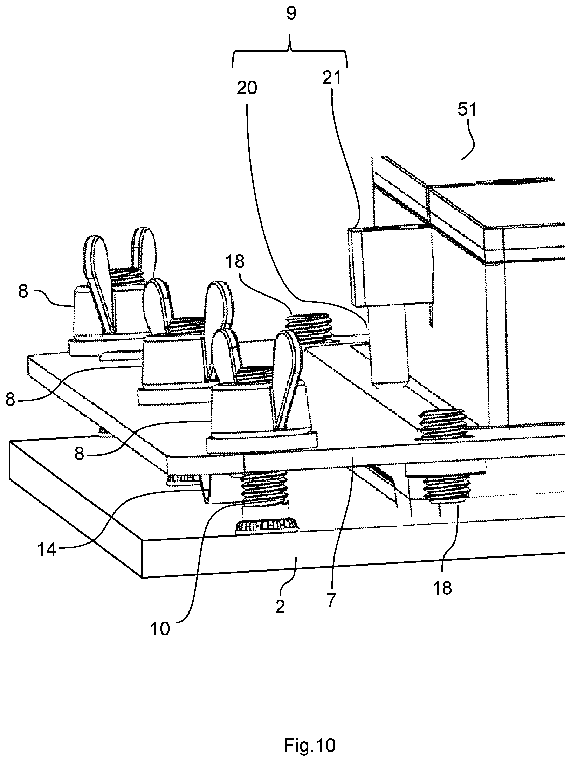

The adjustment plate 7 is mounted onto the IPC 51 using connector elements 9. The connector elements 9 are realized in line with those of the patent application US 2017/0255237 A1 and are as shown in Fig. 10. Namely, each connector element 9 include a protrusion 20 of the adjustment plate 7 formed as an integral part thereof. Each connector element 9 further includes an engagement element 21 of the computer device 51 which is spring loaded. The engagement element 21 can be either in a locked state as shown in Fig. 10, in which the engagement element 21 engages with the protrusion 20, or in an unlocked state (not shown in Fig. 10) in which there is no connection between the engagement element 21 and the protrusion 20.

Looking again at Fig. 5, the hygienic support structure 1 provides the following protection to the computer device 51. Namely, the adjustment plate 7 is fixed to the computer device 51 through the connector elements 9. The adjustment plate 7 is in turn attached to the front plate 2 using the screwing mechanism 8. In the example of Fig. 5, a gasket 15 is provided between the front plate 2 and the adjustment plate 7. In the mounted state shown in Fig. 5, the screwing mechanism 8 pushes the front plate 2 and the adjustment plate 7 towards each other, namely to reduce a distance between the front plate 2 and the adjustment plate 7. On the other hand, the spring portion 14 pushes the front plate 2 and the adjustment plate 7 away from each other, namely to maintain a distance between the front plate 2 and the adjustment plate 7.

The screwing mechanism 8 and the spring portions 14 thus act in opposite directions. This allows positioning the front plate 2 in an accurate manner with respect to the adjustment plate 7 and hence also with respect to the IPC 51, as it is fixedly connected to the adjustment plate 7. Using the screwing mechanism 8 to reduce or increase the distance between the front plate 2 and the adjustment plate 7, the front plate 2 can be brought into a desired position. The front plate 2 can be brought into a position in which it is flush with the monitor 52, as shown in Fig. 5. In this flush position, the monitor 52 and the front plate 2 are aligned along the front side 53. This allows reducing a gap between the front plate 2 and the IPC 51, thereby reducing a risk of dirt accumulation therein. The flush surface is particularly advantageous in positioning the protective sheet 4 thereon, as a smooth and easy to clean surface is thereby provided.

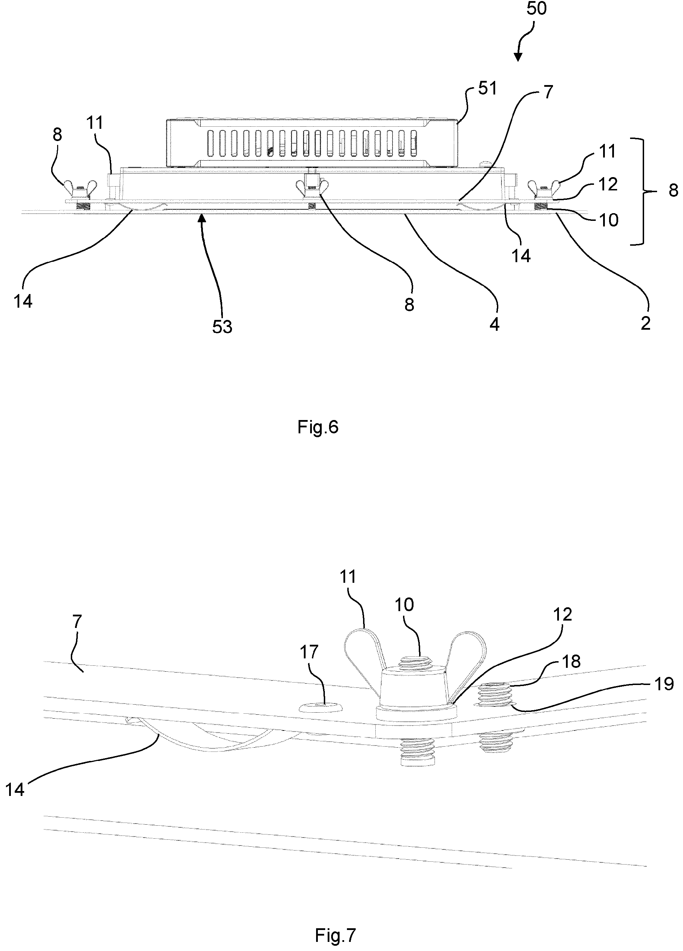

Once the top plate 2 has been correctly positioned, its position can be fixed using one or several locking screws 18, as shown in Fig. 7. Further, Fig. 7 shows the spring portion 14 in greater detail. Namely, it is fixed to the adjustment plate 7 on one side of the spring portion 14 using a rivet 17.

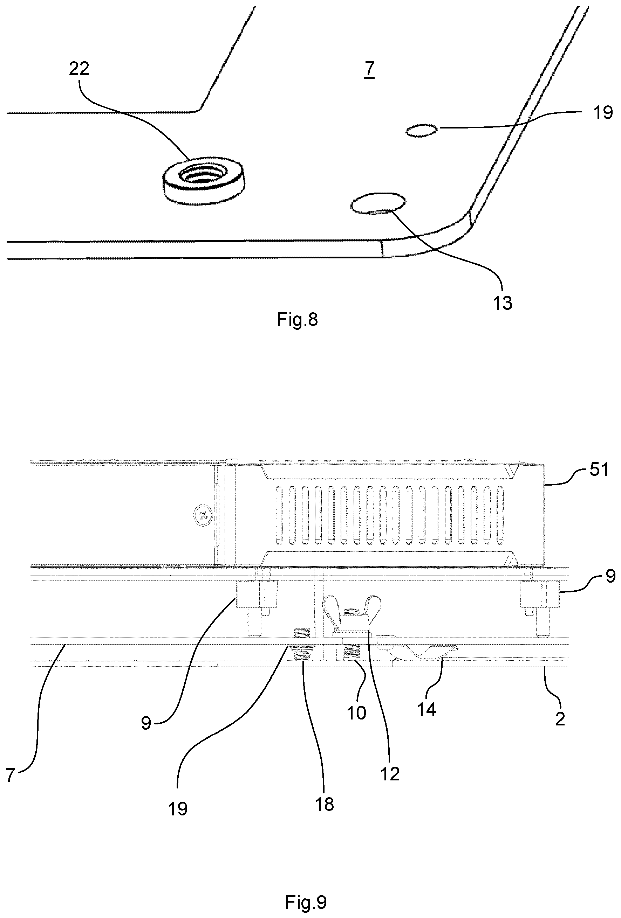

To place the rivet 17, the screws 10 and the locking screws 18 into the adjustment plate 7, the adjustment plate 7 includes rivet openings 22, screw openings 13 and looking screw openings 19 (N+1-th opening), as shown in Fig. 8. All these openings 13, 19, 22 are through holes.

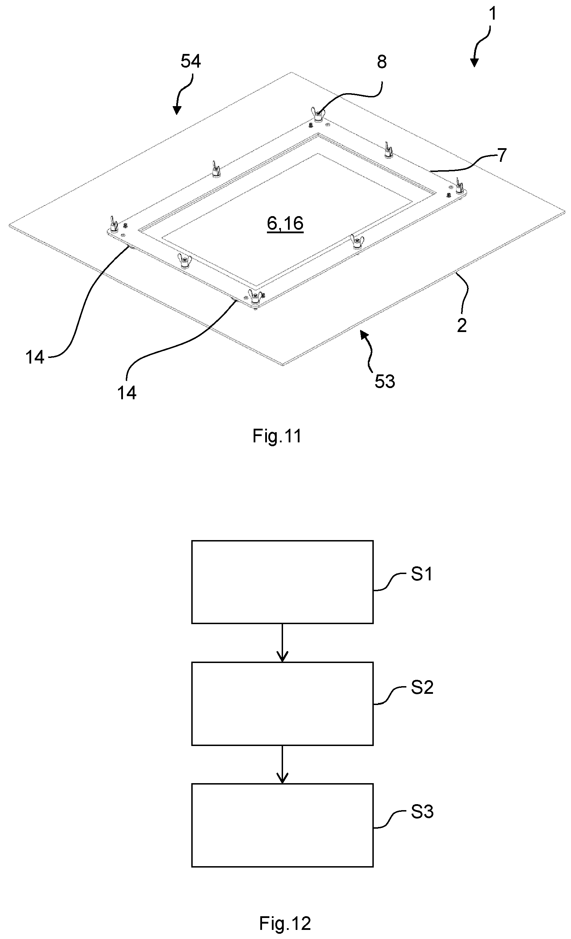

Fig. 6 and 9 show different views of the assembled computer device system 50. Moreover, Fig. 11 shows a hygienic support structure 1 in a mounted (assembled) state, without the IPC 51.

Fig. 12 shows a method for mounting the hygienic support structure 1 on a computer device 51. The method includes, in a step S1, connecting the adjustment plate 7 to the computer device 51 using the connector elements 9.

In a step S2 of Fig. 12, the front plate 2 is placed such that it faces the adjustment plate 7, in particular such that the spring portions 14 face the front plate 2.

In a step S3 of Fig. 12, the screwing mechanisms 8 are fastened such as to connect the front plate 2 and the adjustment plate 7 in a position in which the front plate 2 is flush with the monitor 52.

Although the present invention has been described in accordance with preferred embodiments, it is obvious for the person skilled in the art that modifications are possible in all embodiments. For example, the number N of screws and nuts can vary. The shape of the adjustment plate 7 and the front plate 2 can be different to accommodate for any shape of a computer device 51.

### Reference Numerals:

- 1: hygienic support structure
- 2: front plate
- 3: housing
- 4: protective sheet
- 5: transparent window
- 6: front plate cutout
- 7: adjustment plate
- 8: screwing mechanism
- 9: connector element
- 10: screw
- 11: nut
- 12: washer
- 13: opening
- 14: spring portion
- 15: gasket
- 16: adjustment plate cutout
- 17: rivet
- 18: locking screw
- 19: locking screw opening
- 20: protrusion
- 21: engagement element
- 22: rivet opening
- 23: corner
- 24: edge
- 50: computer device system
- 51: computer device
- 52: monitor
- 53: front side
- 54: back side

## Claims

1. A hygienic support structure (1) for a computer device (51) comprising a monitor, the hygienic support structure (1) including:
a front plate (2);
an adjustment plate (7) configured to be connected to the computer device (51); and
a screwing mechanism (8); wherein
in a mounted state, the front plate (2) and the adjustment plate (7) are connected to one another using the screwing mechanism (8) such as to face one another,
the screwing mechanism (8) is configured for pushing the front plate (2) and the adjustment plate (7) together in the mounted state;
the hygienic support structure **characterised in that**:
the adjustment plate (7) includes a spring portion (14) facing the front plate (2) in the mounted state, the spring portion (14) being for pushing the adjustment plate (7) away from the front plate (2) in the mounted state.

2. The hygienic support structure according to claim 1, wherein the spring portion (14) is a leaf spring, the leaf spring being in particular formed by a metallic sheet having an arc-shape.

3. The hygienic support structure according to claim 1 or 2, wherein a distance of the front plate (2) relative to the adjustment plate (7) is adjustable using the screwing mechanism (8).

4. The hygienic support structure according to any one of claims 1 to 3, wherein the adjustment plate (7) and/or the front plate (2) has a cutout (6, 16), in particular a rectangular cutout, therein for accommodating the computer device (51).

5. The hygienic support structure according to claim 4, wherein the dimensions of the cutout (16) of the adjustment plate (7) are identical with the dimensions of the cutout (6) of the front plate (2), wherein in the mounted state, the cutout (16) of the adjustment plate (7) and the cutout (6) of the front plate (2) are aligned with one another.

6. The hygienic support structure according to any one of claims 1 to 5, wherein the adjustment plate (7) includes at least two, preferably at least four, spring portions (14).

7. The hygienic support structure according to claims 4 and 6, wherein the spring portions (14) are arranged on at least two different sides of the cutout (16) in the adjustment plate (7).

8. The hygienic support structure according to any one of claims 1 to 7, wherein the spring portion (14) is screwed onto the adjustment plate (7) or attached thereto using a rivet (17).

9. The hygienic support structure according to any one of claims 1 to 8, wherein the screwing mechanism (8) is formed by N screws (10) and N nuts (11), wherein
N is larger or equal to two, preferably larger or equal to four;
the N screws (10) are fixedly attached to the front plate (2) and protruding towards the adjustment plate (7) in the mounted state;
the adjustment plate (7) includes at least N openings (13), the openings (13) being arranged such as to accommodate the screws (10) in the mounted state; and
in the mounted state, the N nuts (11) are fixed onto the screws (10) such as to maintain the adjustment plate (7) in place with respect to the front plate (2).

10. The hygienic support structure according to claim 9, wherein the adjustment plate (7) includes at least N+1 openings (13, 19), wherein at least one opening (19) is configured to receive a locking screw (18) for fixedly maintaining a distance between the adjustment plate (7) and the front plate (2).

11. A computer device system (50) comprising:
a computer device (51) comprising a monitor (52); and
the hygienic support structure (1) according to any one of claims 1 to 10; wherein:
the computer device (51) is connected to the adjustment plate (7); and
a distance between the adjustment plate (7) and the front plate (2) is set using the screwing mechanism (8) such that the monitor (52) and the front plate (2) are flush.

12. The computer device system according to claim 11, wherein the computer device (51) is an industrial computer (IC).

13. The computer device system according to claim 11 or 12, wherein the computer device (51) includes a processor and a storage unit.

14. The computer device system according to any one of claims 11 to 13, further comprising a protective sheet (4) which has dimensions larger than the cutout (6) of the front plate (2), wherein in the mounted state, the protective sheet is configured to be attached to another side of the front plate (2) than the side to which the adjustment plate (7) is attached.

15. A method for mounting the hygienic support structure (1) according to any one of claims 1 to 10 on a computer device (51) comprising a monitor (52), the method comprising:
connecting the adjustment plate (7) to the computer device (51);
placing the front plate (2) such that it faces the adjustment plate (7); and
fastening the screwing mechanism (8) such as to connect the front plate (2) and the adjustment plate (7) in a position in which the front plate (2) is flush with the monitor (52).

## Patentansprüche

1. Hygienische Stützstruktur (1) für eine Computervorrichtung (51), die einen Monitor umfasst, wobei die hygienische Stützstruktur (1) Folgendes aufweist:
eine Frontplatte (2);
eine Einstellplatte (7), die eingerichtet ist, mit der Computervorrichtung (51) verbunden zu werden; und
einen Schraubmechanismus (8); wobei
in einem montierten Zustand die Frontplatte (2) und die Einstellplatte (7) unter Verwendung des Schraubmechanismus (8) so miteinander verbunden sind, dass sie einander zugewandt sind,
der Schraubmechanismus (8) eingerichtet ist, die Frontplatte (2) und die Einstellplatte (7) in dem montierten Zustand zusammenzudrücken; wobei die hygienische Stützstruktur **dadurch gekennzeichnet ist, dass**:
die Einstellplatte (7) einen Federabschnitt (14) aufweist, der der Frontplatte (2) in dem montierten Zustand zugewandt ist, wobei der Federabschnitt (14) zum Wegdrücken der Einstellplatte (7) von der Frontplatte (2) in dem montierten Zustand dient.

2. Hygienische Stützstruktur nach Anspruch 1, wobei der Federabschnitt (14) eine Blattfeder ist, wobei die Blattfeder insbesondere durch ein Metallblech mit einer Bogenform gebildet ist.

3. Hygienische Stützstruktur nach Anspruch 1 oder 2, wobei ein Abstand der Frontplatte (2) relativ zu der Einstellplatte (7) unter Verwendung des Schraubmechanismus (8) einstellbar ist.

4. Hygienische Stützstruktur nach einem der Ansprüche 1 bis 3, wobei die Einstellplatte (7) und/oder die Frontplatte (2) einen Ausschnitt (6, 16), insbesondere einen rechteckigen Ausschnitt, darin zur Aufnahme der Computervorrichtung (51) aufweist.

5. Hygienische Stützstruktur nach Anspruch 4, wobei die Abmessungen des Ausschnitts (16) der Einstellplatte (7) mit den Abmessungen des Ausschnitts (6) der Frontplatte (2) identisch sind, wobei im montierten Zustand der Ausschnitt (16) der Einstellplatte (7) und der Ausschnitt (6) der Frontplatte (2) miteinander fluchten.

6. Hygienische Stützstruktur nach einem der Ansprüche 1 bis 5, wobei die Einstellplatte (7) mindestens zwei, vorzugsweise mindestens vier, Federabschnitte (14) aufweist.

7. Hygienische Stützstruktur nach den Ansprüchen 4 und 6, wobei die Federabschnitte (14) auf mindestens zwei verschiedenen Seiten des Ausschnitts (16) in der Einstellplatte (7) angeordnet sind.

8. Hygienische Stützstruktur nach einem der Ansprüche 1 bis 7, wobei der Federabschnitt (14) unter Verwendung eines Niets (17) auf die Einstellplatte (7) geschraubt oder daran befestigt ist.

9. Hygienische Stützstruktur nach einem der Ansprüche 1 bis 8, wobei der Schraubmechanismus (8) durch N Schrauben (10) und N Muttern (11) gebildet ist, wobei
N größer oder gleich zwei, vorzugsweise größer oder gleich vier ist;
die N Schrauben (10) im montierten Zustand fest an der Frontplatte (2) befestigt sind und zur Einstellplatte (7) hin vorstehen;
die Einstellplatte (7) mindestens N Öffnungen (13) aufweist, wobei die Öffnungen (13) so angeordnet sind, dass sie die Schrauben (10) in dem montierten Zustand aufnehmen; und
im montierten Zustand die N Muttern (11) so an den Schrauben (10) befestigt sind, dass sie die Einstellplatte (7) in Bezug auf die Frontplatte (2) an Ort und Stelle halten.

10. Hygienische Stützstruktur nach Anspruch 9, wobei die Einstellplatte (7) mindestens N+1 Öffnungen (13, 19) aufweist, wobei mindestens eine Öffnung (19) eingerichtet ist, eine Feststellschraube (18) zum festen Aufrechterhalten eines Abstands zwischen der Einstellplatte (7) und der Frontplatte (2) aufzunehmen.

11. Computergerätesystem (50), das Folgendes aufweist:
eine Computervorrichtung (51), die einen Monitor (52) umfasst; und
die hygienische Stützstruktur (1) nach einem der Ansprüche 1 bis 10;
wobei:
die Computervorrichtung (51) mit der Einstellplatte (7) verbunden ist; und
ein Abstand zwischen der Einstellplatte (7) und der Frontplatte (2) unter Verwendung des Schraubmechanismus (8) derart eingestellt ist, dass der Monitor (52) und die Frontplatte (2) bündig sind.

12. Computervorrichtungssystem nach Anspruch 11, wobei die Computervorrichtung (51) ein Industriecomputer (IC) ist.

13. Computervorrichtungssystem nach Anspruch 11 oder 12, wobei die Computervorrichtung (51) einen Prozessor und eine Speichereinheit aufweist.

14. Computervorrichtungssystem nach einem der Ansprüche 11 bis 13, ferner umfassend eine Schutzfolie (4), die Abmessungen aufweist, die größer als der Ausschnitt (6) der Frontplatte (2) sind, wobei im montierten Zustand die Schutzfolie eingerichtet ist, an einer anderen Seite der Frontplatte (2) als der Seite, an der die Einstellplatte (7) angebracht ist, angebracht zu werden.

15. Verfahren zum Montieren der hygienischen Stützstruktur (1) nach einem der Ansprüche 1 bis 10 auf einer Computervorrichtung (51), die einen Monitor (52) umfasst, wobei das Verfahren Folgendes aufweist:
Verbinden der Einstellplatte (7) mit der Computervorrichtung (51);
Platzieren der Frontplatte (2) so, dass sie der Einstellplatte (7) zugewandt ist; und
Befestigen des Schraubmechanismus (8), um die Frontplatte (2) und die Einstellplatte (7) in einer Position zu verbinden, in der die Frontplatte (2) mit dem Monitor (52) bündig ist.

## Revendications

1. Structure de support hygiénique (1) pour un dispositif informatique (51) comprenant un moniteur, la structure de support hygiénique (1) comprenant :
une plaque avant (2) ;
une plaque d'ajustement (7) configurée pour être connectée au dispositif informatique (51) ; et
un mécanisme de vissage (8) ; dans laquelle
dans un état monté, la plaque avant (2) et la plaque d'ajustement (7) sont connectées l'une à l'autre en utilisant le mécanisme de vissage (8) de manière à se faire face,
le mécanisme de vissage (8) est configuré pour pousser la plaque avant (2) et la plaque d'ajustement (7) ensemble dans l'état monté ; la structure de support hygiénique étant **caractérisée en ce que** :
la plaque d'ajustement (7) comprend une partie de ressort (14) faisant face à la plaque avant (2) dans l'état monté, la partie de ressort (14) étant destinée à pousser la plaque d'ajustement (7) à l'écart de la plaque avant (2) dans l'état monté.

2. Structure de support hygiénique selon la revendication 1, dans laquelle la partie de ressort (14) est un ressort à lames, le ressort à lames étant en particulier formé par une feuille métallique ayant une forme d'arc.

3. Structure de support hygiénique selon la revendication 1 ou 2, dans laquelle une distance de la plaque avant (2) par rapport à la plaque d'ajustement (7) est ajustable en utilisant le mécanisme de vissage (8).

4. Structure de support hygiénique selon l'une quelconque des revendications 1 à 3, dans laquelle la plaque d'ajustement (7) et/ou la plaque avant (2) a une découpe (6, 16), en particulier une découpe rectangulaire, à l'intérieur de celle-ci pour recevoir le dispositif informatique (51).

5. Structure de support hygiénique selon la revendication 4, dans laquelle les dimensions de la découpe (16) de la plaque d'ajustement (7) sont identiques aux dimensions de la découpe (6) de la plaque avant (2), dans laquelle, dans l'état monté, la découpe (16) de la plaque d'ajustement (7) et la découpe (6) de la plaque avant (2) sont alignées l'une avec l'autre.

6. Structure de support hygiénique selon l'une quelconque des revendications 1 à 5, dans laquelle la plaque d'ajustement (7) comprend au moins deux, de préférence au moins quatre, parties de ressort (14).

7. Structure de support hygiénique selon les revendications 4 et 6, dans laquelle les parties de ressort (14) sont disposées sur au moins deux côtés différents de la découpe (16) dans la plaque d'ajustement (7).

8. Structure de support hygiénique selon l'une quelconque des revendications 1 à 7, dans laquelle la partie de ressort (14) est vissée sur la plaque d'ajustement (7) ou fixée à celle-ci en utilisant un rivet (17).

9. Structure de support hygiénique selon l'une quelconque des revendications 1 à 8, dans laquelle le mécanisme de vissage (8) est formé par N vis (10) et N écrous (11), dans laquelle
N est supérieur ou égal à deux, de préférence supérieur ou égal à quatre ;
les N vis (10) sont fixées de manière fixe à la plaque avant (2) et font saillie vers la plaque d'ajustement (7) dans l'état monté ;
la plaque d'ajustement (7) comprend au moins N ouvertures (13), les ouvertures (13) étant disposées de manière à recevoir les vis (10) dans l'état monté ; et
dans l'état monté, les N écrous (11) sont fixés sur les vis (10) de manière à maintenir la plaque d'ajustement (7) en place par rapport à la plaque avant (2).

10. Structure de support hygiénique selon la revendication 9, dans laquelle la plaque d'ajustement (7) comprend au moins N+1 ouvertures (13, 19), dans laquelle au moins une ouverture (19) est configurée pour recevoir une vis de verrouillage (18) pour maintenir de manière fixe une distance entre la plaque d'ajustement (7) et la plaque avant (2).

11. Système de dispositif informatique (50) comprenant :
un dispositif informatique (51) comprenant un moniteur (52) ; et
la structure de support hygiénique (1) selon l'une quelconque des revendications 1 à 10 ; dans lequel :
le dispositif informatique (51) est connecté à la plaque d'ajustement (7) ; et
une distance entre la plaque d'ajustement (7) et la plaque avant (2) est établie en utilisant le mécanisme de vissage (8) de sorte que le moniteur (52) et la plaque avant (2) sont de niveau.

12. Système de dispositif informatique selon la revendication 11, dans lequel le dispositif informatique (51) est un ordinateur industriel (IC).

13. Système de dispositif informatique selon la revendication 11 ou 12, dans lequel le dispositif informatique (51) comprend un processeur et une unité de stockage.

14. Système de dispositif informatique selon l'une quelconque des revendications 11 à 13, comprenant en outre une feuille de protection (4) qui a des dimensions plus grandes que la découpe (6) de la plaque avant (2), dans lequel, dans l'état monté, la feuille de protection est configurée pour être fixée à un autre côté de la plaque avant (2) que le côté auquel la plaque d'ajustement (7) est fixée.

15. Procédé de montage de la structure de support hygiénique (1) selon l'une quelconque des revendications 1 à 10 sur un dispositif informatique (51) comprenant un moniteur (52), le procédé comprenant :
la connexion de la plaque d'ajustement (7) au dispositif informatique (51) ;
le placement de la plaque avant (2) de sorte qu'elle fait face à la plaque d'ajustement (7) ; et
la fixation du mécanisme de vissage (8) de manière à connecter la plaque avant (2) et la plaque d'ajustement (7) dans une position dans laquelle la plaque avant (2) est de niveau avec le moniteur (52).
